Europäisches Patentamt

European Patent Office    (11) Publication number: **0 053 424**

Office européen des brevets    **A1**

(12) **EUROPEAN PATENT APPLICATION**

(21) Application number: **81300924.8**    (51) Int. Cl.³: **B 01 D 53/14, B 01 D 53/18**

(22) Date of filing: **05.03.81**

(30) Priority: **28.11.80 GB 8038382**

(43) Date of publication of application: **09.06.82 Bulletin 82/23**

(84) Designated Contracting States: **BE DE FR IT NL**

(71) Applicant: **British Gas Corporation, Rivermill House 152 Grosvenor Road, London SW1V 3JL (GB)**

(72) Inventor: **Timmins, Cyril, 11 Whitehouse Close, Solihull West Midlands B91 1SL (GB)**
Inventor: **Templeman, John Joseph, 31 Everitt Drive Knowle, Solihull West Midlands B93 9EP (GB)**
Inventor: **Hodrien, Ronald Christopher, 49 Wherretts Well Lane, Solihull B91 2SO (GB)**

(74) Representative: **Wallace, Walter et al, British Gas Corporation Patents Department 326 High Holborn, London, WC1V 7PT (GB)**

(54) **Gas separation by physical absorption.**

㊗ The invention provides a method of generating solvent used in the separation of gases from mixtures of gases at high pressure by selective physical absorption in which a jet pump is used to obtain subatmospheric pressure in the final stage of pressure reduction. In comparison with known methods, the invention offers reduced power requirements, simplicity of construction and increased reliability of operation.

The invention relates to processes for the removal of selected gases from gas mixtures by physical absorption in a solvent and in particular to a method of regenerating the solvent for re-use.

Processes are known and have been commercially exploited which are based on selective physical absorption (i.e. without chemical reaction) of some of the components of a gas mixture into a circulating solvent. Acid gases such as carbon dioxide, hydrogen sulphide and carbonyl sulphide, for example, are commonly removed from manufactured fuel gases and synthesis gases using such processes. The solvent may be water or a variety of organic liquids, used separately or as mixtures, and absorption is usually effected at superatmospheric pressure. The great advantage of such processes over those in which chemical reaction occurs is that solvent regeneration (i.e. desorption of the absorbed gases) can be carried out by pressure reduction alone, without the need for heating.

In a process based on continuous solvent circulation, the gas carrying capacity of the solution and the extent to which the selected gases are removed from the treated gas stream are both limited by the extend to which the solution is regenerated prior to its return to the absorption column. In the commercial application of physical absorption processes it is frequently necessary to regenerate the solution to a dissolved gas content equivalent to an equilibrium gas partial pressure over the solution of less than 1 bar (1 atmosphere). This is carried out by the use of mechanical vacuum pumps or by dilution with a stripping gas at atmospheric pressure. Thus either shaft power or a supply of stripping gas, or both, are required to achieve adequate regeneration.

The present invention seeks to overcome these limitations and accordingly provides a method for the regeneration of a solvent used in a physical absorption process for the removal of selected components of a gas mixtue at superatmozpheric pressure, which method comprises the steps of:-

(a)   releasing absorbed gas or gases from the solvent in one or more flash stages at a superatmospheric pressure below that used in the absorption stage or any preceding flash stage;

(b)   releasing further absorbed gas or gases from the solvent in a flash stage at or near atmospheric pressure; and

(c)   using the gas or gases released superatmospheric pressure, wholly or in part as the motive fluid to drive one or more  jet pumps to develop a subatmospheric pressure in one or more flash stages in which regeneration of the solvent by release of absorbed gas or gases is completed.

Provided that the partial pressure of the gases to be treated is substantially in excess of 1 bar .as is usually the case, a portion of the absorbed gas may be released at controlled superatmospheric pressure in one or more initial flash stages.   Further absorbed gas may then be removed from the solution in a subsequent flash stage operated at or near atmospheric pressure.   This gas is usually vented to atmosphere through a stack but may,when use can be made of it,  be taken to other process stages.   At least some of the gas discharged at superatmospheric pressure from the preceding flash stages may then be introduced as a motive fluid into a jet pump, which may be a multi-stage device, or into several jet pumps, so as to develop a subatmospheric pressure in a third group of flash stages in which regeneration of the solvent may be completed without the use of shaft power. The jet pump discharges the desorbed gases from the superatmospheric and subatmospheric flash stages at a pressure slightly above atmospheric, enabling them to be discharged to atmosphere or taken to other process stages as required.

The applicability of the invention will depend upon the partial pressure of the gases to be removed in the feed gas, the desired final discharge pressure of the desorbed gas and the ratio of the amounts of gas desorbed at superatmospheric and subatmospheric pressure. Should the latter ratio be inadequate for the operation of the jet pump, under the normal process conditions, a more favourable ratio may be achieved by mild heating of the gas-laden solution. The amount of heat required for this purpose, and the temperature level, would both be far less than that required for regeneration in a chemical absorption process, or that required to generate shaft power by means of a stream turbine, and would normally be within the availability of waste heat froma fuel gas manufacturing process. In the case of the well known Rectisol process, which uses refrigerated methanol as a solvent for acid gases, the heat would be available from the process gas at around ambient temperature.

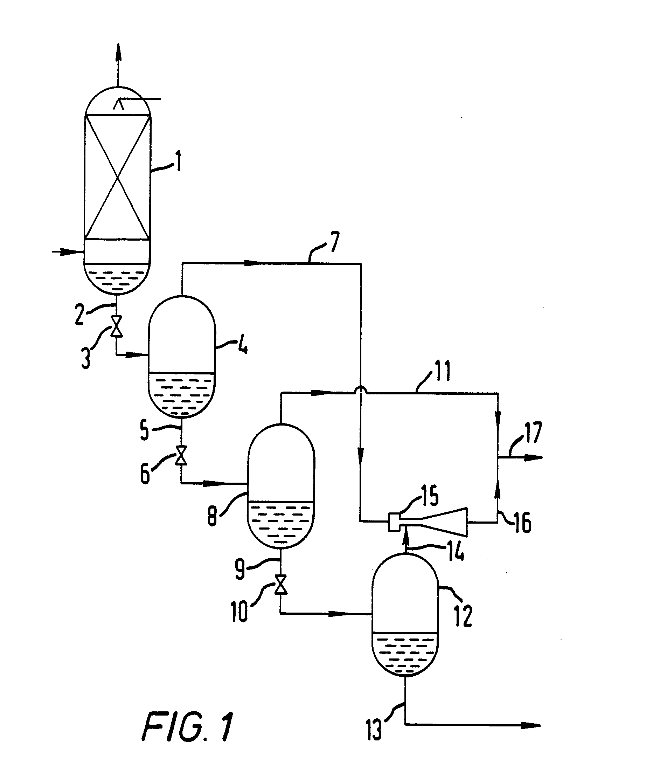

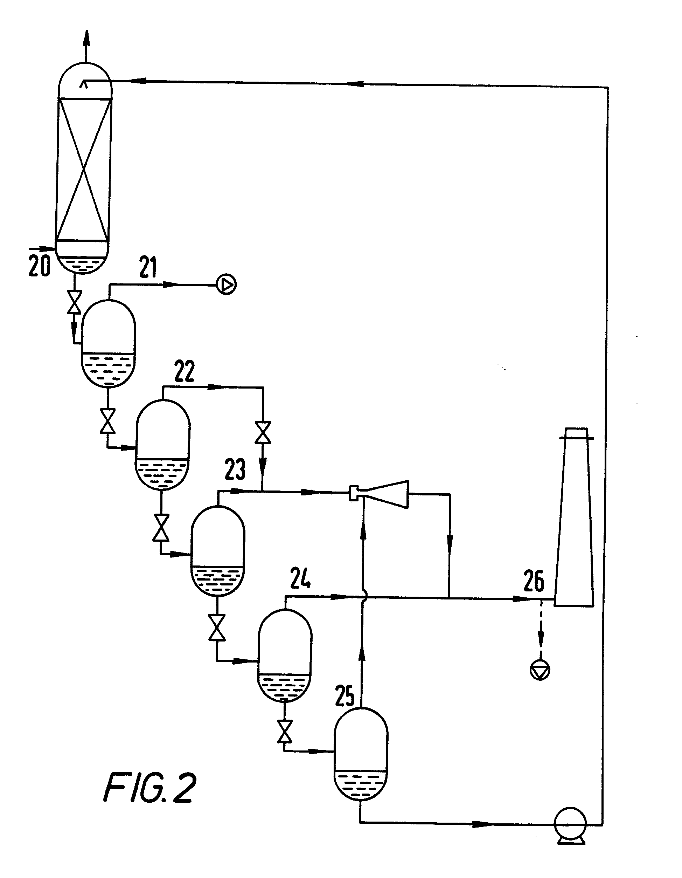

The invention will now be described by way of example with reference to the accompanying drawings, of which Figure 1 shows schematically an embodiment of the invention in simple form and Figure 2, similarly,representing a more eleborate arrangement.

Referring to Figure 1, the solvent to be regenerated is discharged from absorber 1 through line 2 and valve 3 into a first flash vessel 4. As it passes through valve 3, the solvent undergoes a pressure reduction such that a pressure is maintained in flash vessel 4 which is low enough to allow the evolution of a substantial part of the dissolved gas from the solvent but high enough for subsequent use of the evolved gas as the motive fluid in jet pump 15. Partly regenerated solvent is discharged through line 5 and valve 6 into a second flash vessel 8 and the evolved gas is conveyed to jet pump 15 by line 7. The pressure is further reduced, virtually to atmospheric, as the partly regenerated solvent passed through valve 6 so that more dissolved gas is released from the solvent in flash vessel 8. This gas is conveyed through line 11 to line 17. The solvent, not yet completely regenerated, is discharged through line 9 and valve 10 into a third flash vessel 12. In vessel 12 the pressure is reduced below atmospheric by jet pump 15, which draws the final quantity of gas evolved from the solvent through line 14 to line 16, through which it is conveyed to line 17. The gas removed from the solvent in all three flash vessels is taken through line 17 to be disposed of and the regenerated solvent, discharged from flash vessel 12 through line 13, is returned to absorber 1 for re-use.

Example

A fuel gas, produced in a pilot scale plant at the rate of 566.4 $m^3$/hour and containing 43% (by volume) of carbon dioxide, the remainder consisting of the combustible gases carbon monoxide, hydrogen and methane, is washed with methanol in a refrigerated absorption column to reduce its carbon dioxide content to 2%. The methanol is supplied to the absorption column at the rate of 1002.9 litres/hour at a temperature of-65°C. Despite the refrigeration,the heat of absorption of the carbon dioxide and other gases heats the methanol, which leaves the base of the column at -26°C.

The loaded methanol is then regenerated using the process of the invention in the arrangement depicted by Figure 2. As can be seen, a train of five flash vessels is used, of which the first three operate at superatmospheric pressure.

For clarity of presentation, only the gas streams have been numbered. The results of this treatment are shown in Table 1.

Table 1

| Gas Stream | Pressure bar (abs) | Temperature °C | Flow Rate $m^3/h$ | Combustible gas content, % vol. |
|---|---|---|---|---|
| 20 Feed gas | 27.58 | -25 | 566.40 | 57.0 |
| 21 1st flash gas | 10.34 | -30 | 53.01 | 27.0 |
| 22 2nd flash gas | 6.90 | -34 | 45.96 | 6.0 |
| 23 3rd flash gas | 3.45 | -48 | 92.04 | 3.2 |
| 24 4th flash gas | 1.38 | -58 | 62.64 | 0.9 |
| 25 5th flash gas | 0.55 | -64 | 46.10 | 0.5 |
| 26 Vent gas | 1.24 | | 246.75 | 2.6 |

The first flash gas stream, 21, is rich in combustible gas and for this reason is not taken to the jet pump. On a full-scale plant it would be either used as a plant fuel or recycled to the absorber. The second flash stream 22, at 6.9 bar is depressurised to 3.45 bar and combined with the third flash gas stream at 3.4 bar to provide a mixed motive fluid stream which is taken to the jet pump. Stream 24, the fourth flash gas stream at 1.38 bar, is conveyed to the vent stack.

The methanol leaving the fourth flash vessel is in equilibrium with carbon dioxide at 1.38 bar, ignoring the remaining traces of combustible gases, which amount to no more than 0.9% vol, and would thus not allow removal of carbon dioxide from the feed gas at 27.58 bar to less than 5%, if returned to the absorber at the flash outlet temperature of $-58^{o}C$. Improving the absorption capability of the returned methanol by further cooling would require a refrigerated system of high cost and high power consumption because of the relatively low temperature needed. To remove carbon dioxide from the feed gas to the desired level of 2% vol. it is thus necessary to operate the final flash stage at subatmospheric pressure. conventionally, a vacuum pump is used for this purpose but in this example the fifth flash gas stream is instead taken to the suction inlet of the jet pump, into which it is drawn by the momentum of the motive fluid stream issuing from the nozzle within the pump and compressed to a discharge pressure of 1.24 bar. The discharge stream from the jet pump is combined with the fourth flash gas stream to form the vent gas stream.

Had a mechanised pump been used to remove the fifth flash gas stream from the fifth flash vessel, the power requirement, calculated at a typical pump efficiency of 60%, would have been 1.4 kW. On an equivalent large scale plant with a flow of $28.32 \times 10^6 m^3$/day of the same feed gas to the absorber, the power requirement would be 295 kW. The jet pump, on the other hand, makes use of pressure energy of the flash gases and required no additional power. Moreover, the jet pump has the further advantages that it is cheaper than a mechanical pump and, since it has no moving parts, is more reliable.

As this example clearly show, the invention offers advantages in the regeneration of solvents used in selective physical absorption processes for gas separation.

0053424

## Claims

1. A method for the regeneration of a solvent used in a physical absorption process for the removal of selected components of a gas mixture at superatmospheric pressure, which method comprises the steps of:-

   (a) releasing absorbed gas or gases from the solvent in one or more flash stages at a superatmospheric pressure below that used in the absorption stage or any preceding flash stage;

   (b) releasing further absorbed gas or gases from the solvent in a flash stage at or near atmospheric pressure;

   (c) using the gas or gases released at superatmospheric pressure, wholly or in part, as the motive fluid to drive one or more jet pumps to develop a subatmospheric pressure in one or more flash stages in which regeneration of the solvent by release of absorbed gas or gases is completed.

0053424

FIG. 1

FIG.2

0053424
Application number

EP 81 30 0924.8

# European Patent Office

## EUROPEAN SEARCH REPORT

| | DOCUMENTS CONSIDERED TO BE RELEVANT | | CLASSIFICATION OF THE APPLICATION (Int. Cl.3) |
|---|---|---|---|
| **Category** | **Citation of document with indication, where appropriate, of relevant passages** | **Relevant to claim** | |
| | EP - A1 - 0 015 413 (LINDE AG) <br> * claims 1 bis 4 * <br> --- | 1 | B 01 D 53/14 <br> B 01 D 53/18 |
| A | DE - C - 855 696 (GEWERKSCHAFT VICTOR) <br> * complete document * <br> -- | | |
| A | DD - A - 85 061 (BENSON, FIELD & EPES) <br> * claim 1 * <br> --- | | |
| A | US - A - 2 781 862 (F. FUSSMANN) <br> * complete document * <br> . ----- | | |

**TECHNICAL FIELDS SEARCHED (Int. Cl.3)**

B 01 D 53/00

B 01 J 19/04

**CATEGORY OF CITED DOCUMENTS**

X: particularly relevant

A: technological background

O: non-written disclosure

P: intermediate document

T: theory or principle underlying the invention

E: conflicting application

D: document cited in the application

L: citation for other reasons

&: member of the same patent family, corresponding document

The present search report has been drawn up for all claims

| Place of search | Date of completion of the search | Examiner |
|---|---|---|
| Berlin | 04-01-1982 | BERTRAM |

EPO Form 1503.1 06.78